**Europäisches Patentamt**

**European Patent Office**

**Office européen des brevets**

(19)

(11) Veröffentlichungsnummer : **0 339 325 B1**

(12) ## EUROPÄISCHE PATENTSCHRIFT

(45) Veröffentlichungstag der Patentschrift :
**11.03.92 Patentblatt 92/11**

(51) Int. Cl.⁵ : **B01J 2/26,** B01J 2/20,
A23G 3/02

(21) Anmeldenummer : **89106074.1**

(22) Anmeldetag : **06.04.89**

(54) **Verfahren und Vorrichtung zur Herstellung von Pastillen.**

Verbunden mit 89904541.3/0375750
(europäische
Anmeldenummer/Veröffentlichungsnummer)
durch Entscheidung vom 10.01.91.

(30) Priorität : **23.04.88 DE 3813756**

(43) Veröffentlichungstag der Anmeldung :
**02.11.89 Patentblatt 89/44**

(45) Bekanntmachung des Hinweises auf die
Patenterteilung :
**11.03.92 Patentblatt 92/11**

(84) Benannte Vertragsstaaten :
**AT BE CH DE ES FR GB GR IT LI LU NL SE**

(56) Entgegenhaltungen :
**EP-A- 0 134 944**
**EP-A- 0 166 200**
**DE-A- 3 530 508**
**US-A- 4 578 021**

(73) Patentinhaber : **Santrade Ltd.**
**Alpenquai 12 P.O. Box 321**
**CH-6002 Luzern (CH)**

(72) Erfinder : **Froeschke, Reinhard**
**Ulrichstrasse 69**
**W-7056 Weinstadt 1 (DE)**

(74) Vertreter : **Wilhelm & Dauster Patentanwälte**
**European Patent Attorneys**
**Hospitalstrasse 8**
**W-7000 Stuttgart 1 (DE)**

## Beschreibung

Die Erfindung betrifft ein Verfahren zur Herstellung von Pastillen, nach dem Oberbegriff des Patentanspruches 1.

Ein Verfahren dieser Art ist bekannt (DE-PS 28 53 054 und DE-PS 29 41 802). Bei diesen bekannten Bauarten wird die viskose Masse in Rohrkörper geführt, die so ausgelegt sind, daß, bedingt durch einen gewissen Überdruck innerhalb der rotierenden Rohrkörper, die Masse in Tropfenform nach unten herausgedrückt wird, wenn die Öffnungen der beiden Rohrkörper jeweils zur Deckung kommen. Die so gebildeten Tropfen fallen dann nach unten auf ein Kühlband, werden aufgrund ihres Eigengewichtes noch etwas flachgedrückt und erstarren dann zu der gewünschten, in der Regel etwa linsenförmigen Pastillenform.

Diese Art der Pastillenherstellung, die eine Tropfenbildung erforderlich macht, setzt gewisse Durchmessergrößen für die Durchtrittsöffnungen in dem äußeren, rotierenden Rohrkörper voraus. Die Größe der erzeugbaren Pastillen ist daher nach unten beschränkt.

Der Erfindung liegt die Aufgabe zugrunde, ein Verfahren der eingangs genannten Art vorzuschlagen, mit dem wesentlich kleinere Pastillen, sogenannte Mikropastillen, ohne großen Mehraufwand herstellbar sind.

Zur Lösung dieser Aufgabe wird ein Verfahren mit den Merkmalen des Patentanspruches 1 vorgeschlagen. Durch dieses Verfahren wird das bisher eingesetzte Herstellungsverfahren, das auf der Tropfenbildung beruht, verlassen und es werden die einzelnen, später zu den Mikropastillen erhärtenden tropfenartigen Mengen durch die diskontinuierlichen Berührung der aus den Öffnungen austretenden Masse mit einer Kontaktfläche erzeugt, welche die Masseteilchen aufgrund der ihnen innewohnenden Zähigkeit zwangsläufig aus den Öffnungen herauszieht. Die Dosierung der einzelnen Massestücke kann dabei durch Öffnen oder Schließen entsprechender Austrittsöffnungen, aber auch durch eine entsprechende Bewegung einer Transportfläche erreicht werden, die auf die aus entsprechenden Öffnungen austretenden Teilmengen zu und intermittierend wieder von dieser wegbewegt wird.

Durch den Einsatz des neuen Verfahrens gemäß der Erfindung, wird es daher möglich, wesentlich kleinere Pastillen - sogenannte Mikropastillen - auf eine wirtschaftliche Weise herzustellen. Daher können an sich bekannte, rotierende Rohrkörper zur Durchführung eingesetzt werden. Es hat sich gezeigt, daß dann die Anzahl der im äußeren rotierenden Rohrkörper anzubringenden Düsen und Öffnungen sehr viel größer als bei bekannten Bauarten gewählt werden kann, ohne daß der Produktionsfluß ins Stocken kommt. Dadurch läßt sich, trotz der Möglichkeit kleine Pastillen herzustellen, der mengenmäßige Ausstoß der neuen Vorrichtung auch in etwa in der Größenordnung halten, wie dies beim Vertropfen von Medien mit den bekannten Einrichtungen möglich ist. Es ist anzunehmen, daß die erfindungsgemäße Vorrichtung nur dann einsetzbar ist, wenn die Produkte in einem Bereich mit höherer Viskosität, ungefähr ab 1000 cP liegen. Die Einstellung der Viskosität erfolgt in an sich bekannter Weise, in der Regel durch Steuerung der Temperatur des auszuformenden Mediums. Dem Rotoformer werden entsprechende Beheizungen zugeordnet.

Möglich ist es aber auch, zur Durchführung des neuen Verfahrens Behälter mit Ausflußöffnungen vorzusehen, aus denen die viskose Masse durch Schwerkraft austritt und vor dem Abtropfen jeweils von einer auf die Ausflußöffnungen zubewegte Oberfläche eines Transportbandes oder einer Kühlwalze abgenommen und abgezogen wird.

Vorteilhafte Weiterbildungen des Gegenstandes der Erfindung sind in den Unteransprüchen gekennzeichnet, von denen der Anspruch 8 eine vorteilhafte Lösung des bei der erfindungsgemäßen Vorrichtung durch das angewendete Verfahren bedingten und bei manchen Produkten auftretenden Fadenziehens bringt. Die zunächst am Umfang des äußeren rotierenden Rohrkörpers anhaftenden Materialteile ziehen beim Weiterdrehen des Rohrkörpers relativ zum ebenfalls sich weiterbewegenden Transportband Fäden, die aber vom Umfang des Rohrkörpers durch die Fadenwickelrolle abgelöst und dann auf die Fadenwickelrolle aufgewickelt werden. Während ihres Transportes, unterhalb der Fadenwickelwalze hindurch, werden daher alle Fadenenden abgezogen, so daß die dann der Kühlung unterworfenen Mikropastillen nach dem Zurücksinken des Fadenendes zu einer einwandfreien Pastillenform aushärten und keine abstehenden Fadenenden auf dem Band vorhanden sind.

Um dies zu erreichen, sind die Merkmale der Ansprüche 9 und 10 sehr vorteilhaft. Anspruch 11 schließlich umreißt eine Möglichkeit, die Masse der aufgewickelten Fäden im fließfähigen Zustand zu halten und sie dann dem Umfang des äußeren rotierenden Rohrkörpers wieder abzugeben, der die an ihm außen anhaftende zusätzliche, aber fließfähige Masse, nach innen in einen Bereich abgibt, in dem zwischen den inneren stillstehenden Rohrkörper und dem äußeren rotierenden Rohrkörper durch einen Spalt ein Unterdruck auftritt.

Der Gegenstand der Erfindung ist in der Zeichnung anhand von schematischen Darstellungen des neuen Verfahrens und anhand von Ausführungsbeispielen der Vorrichtung zur Durchführung des Verfahrens dargestellt und wird im folgenden beschrieben.

Es zeigen:

EP 0 339 325 B1

Fig. 1 eine schematische Darstellung einer Möglichkeit zur Ausführung des erfindungsgemäßen Verfahrens zur Herstellung von Pastillen, bei dem viskose Masse nach unten durch Öffnungen ausfließt und von einer darunter hinwegbewegten Oberfläche aufgenommen wird,

Fig. 2 den ersten Schritt einer beginnenden Tropfenformung an den Öffnungen, mit der folgenden Abnehmbewegung der Oberfläche,

Fig. 3 den zweiten Verfahrensschritt, bei dem die aus den Öffnungen ausgetretene Teilmasse von der Oberfläche seitlich weggezogen wird,

Fig. 4 den Zeitpunkt, zu dem die Teilmasse von der Öffnung abreißt,

Fig. 5 einen schematischen Querschnitt durch rotierende Rohrkörper einer Vorrichtung zur wirtschaftlichen Durchführung des Verfahrens der Fig. 1 bis 4 und

Fig. 6 eine Variante der Vorrichtung nach Fig. 5.

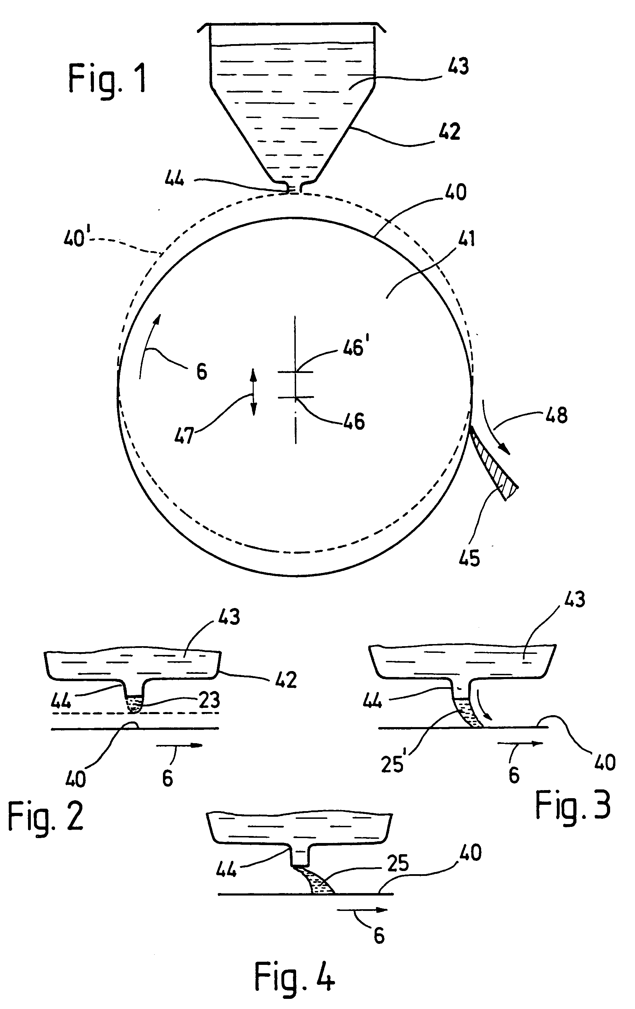

In der Fig. 1 ist schematisch ein in Richtung des Pfeiles (6) um die Achse (46) rotierende Walze (41) dargestellt, die in nicht näher gezeigter Weise vertikal im Sinn der Pfeile (47) intermittierend angehoben werden kann. Die Walze (41) ist mit ihrer Oberfläche (40) dabei in die gestrichelt dargestellte Lage (40') bewegbar, in der diese Oberfläche (40) ganz nahe an eine düsenförmige Ausflußöffnung (44) eines Behälters (42) gelangt, der mit einer flüssigen, viskosen Masse (43) gefüllt ist. Diese Masse kann auf nicht näher dargestellte Weise auf einer bestimmten Temperatur gehalten werden, bei der sie eine solche Viskosität aufweist, daß sie aufgrund der Schwerkraft aus der Ausflußöffnung (44) langsam und tropfenweise herausfließen würde. Dabei ist nicht nur eine Ausflußöffnung (44) oberhalb der Walze (41) im Bereich der durch die Achse (46) gehenden Vertikalebene angeordnet, sondern eine Reihe von Ausflußöffnungen, die im wesentlichen längs einer Mantellinie der Walze (41) verlaufen.

Durch die Hin- und Herbewegung der Walze (41) im Sinn der Pfeile (47), bei der die Achse (46) in die Lage (46') angehoben wird, können die aus der Öffnung (44) noch nicht ganz ausgetretenen, sich bildenden Tropfen, vor dem Ablösen abgefangen, von der Oberfläche (40) erfaßt und im Sinne des Pfeiles (6) mitgenommen werden. Die Walze (41) kann als eine Kühlwalze ausgebildet werden, so daß die von der Oberfläche (40) mitgenommenen und auf der Oberfläche haftenden Masseteilchen bei der Bewegung auf der Oberfläche der Walze (41) abkühlen und erstarren. Sie können im Sinne des Pfeiles (48) über einen Schaber (45) abgenommen werden.

Die für das neue Verfahren dabei wichtigen Verfahrensschritte, die beim Austreten der viskosen Masse (43) aus dem Behälter (42) auftreten, sind schematisch anhand der Fig. 2 bis 4 dargestellt. Fig. 2 zeigt, daß sich unter dem Einfluß der Schwerkraft an der Ausflußöffnung (44) eine etwa der Kuppe eines Tropfens entsprechende Teilmasse (23) bildet. Die Oberfläche (40) befindet sich in diesem Verfahrensschritt noch in einem, wenn auch geringem Abstand zu der Kuppe der Teilmasse (23).

Gemäß Fig. 3 wird dann die Oberfläche (40), die sich im Sinne des Pfeiles (6) von links nach rechts bewegt, in die in der Fig. 2 gestrichelt angedeutete Lage angehoben, so daß sie mit dem dann noch etwas weiter nach unten ausgetretenen Teil der Kuppe der Teilmasse (23) in Berührung kommt. Aufgrund der ihr innewohnenden Zähigkeit haftet die Teilmasse an der Oberfläche (40) an und kann bei der Wegbewegung der Oberfläche (40), die sowohl im Sinne der Pfeile (47) wieder vertikal nach unten als auch im Sinne des Pfeiles (6) nach rechts erfolgen kann, aus der Öffnunge herausgezogen, und zwar so weit, daß sich, gemäß Fig. 4, die zunächst in Strangform (25') verlaufende Teilmasse zu einem viskosen, fließfähigen Häufchen (25) ausbildet, dessen Verbindung zur darüberliegenden und aus der Öffnung (44) nachfließenden viskosen Masse abreißt. Der an dem Häufchen (25) zunächst noch befindliche abgerissene Zipfel sinkt aufgrund der noch vorhandenen Fließfähigkeit in das Häufchen zurück und bildet unter dem Einfluß der Oberflächenkräfte eine etwa linsenförmige Form, in der die Masse dann, wie in Fig. 1 angedeutet, auf der Oberfläche (40) zur Pastillenform erstarrt.

Durch dieses zwangsweise Abziehen der zähen Masse aus einer Öffnung gelingt es, sehr geringe Mengen abzunehmen, so daß die mit dem neuen Verfahren herstellbaren Pastillen sehr klein sein können.

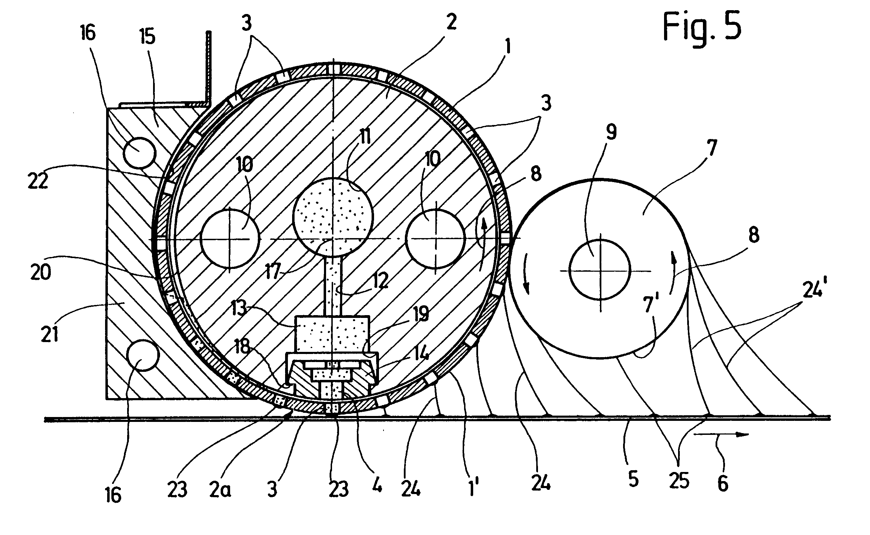

In Fig. 5 ist ein äußerer Rohrkörper (1) drehbar und konzentrisch an einem inneren, stillstehenden Rohrkörper (2) geführt, der ebenfalls zylindrisch ist und in seinem Inneren eine Bohrung (11) zur Zuführung der zu verarbeitenden Masse und zwei Bohrungen (10) zur Zufuhr eines Wärmetauschmediums aufweist. Alle drei Bohrungen (10 und 11) sind in nicht näher dargestellter Weise an einer Stirnseite des inneren Rohrkörpers (2) mit einem Außenanschluß versehen und im Bereich der anderen Stirnseite geschlossen. Die Bohrungen (10) können dort auch untereinander in Verbindung stehen.

Der innere Rohrkörper (2) besitzt mehrere, senkrecht zur Mittelachse (17) nach unten verlaufende Bohrungen (12), die in einen längs im Rohrkörper (2) verlaufenden Raum (13) einmünden, der nach unten eine Erweiterung aufweist, in welche eine Düsenleiste (14) eingesetzt ist, die am Herausfallen durch ihre seitlichen Führungsansätze (18) gehalten ist. Diese Leiste (14) wird von einer Stirnseite her in ihre entsprechende Führung (19) eingeschoben. Sie besitzt eine Reihe von nach unten führenden Öffnungen (4), die zyklisch mit Öffnungen (3) zur Deckung kommen, die gleichmäßig auf dem Umfang des äußeren Rohrkörpers (1) verteilt

3

angeordnet sind. Der äußere Rohrkörper (3) rotiert um den inneren feststehenden Rohrkörper (2).Er ist in bekannter Weise (siehe DE-PS 29 41 802) angetrieben und rotiert in Richtung des Pfeiles (8) um den inneren Rohrkörper (2).

Im Bereich der linken Hälfte des Rohrkörpers (2) ist dessen Außenwand teilweise exzentrisch ausgebildet, so daß sich ein exzentrischer Spalt (20) zwischen dem äußeren Rohrkörper (1) und dem inneren Rohrkörper (2) bildet, der dazu dient, in diesem Bereich einen durch die Rotation des Rohrkörpers (1) bedingten Unterdruck zu erzeugen, der dazu ausgenutzt werden kann, Material, das sich noch am Außenumfang (1') des Rohrkörpers (1) befindet, durch die in den Bereich des Spaltes (20) hereinlaufenden Öffnungen (3) nach innen zu ziehen. Hierauf wird noch eingegangen werden. Dem Bereich des Spaltes (20) gegenüber ist ein Heizblock (21) mit zwei zum Durchfluß eines Wärmetauschmediums oder zum Einbau von Heizstäben dienenden Bohrungen (16) angeordnet, der mit dem Außenumfang (1') des Rohrkörpers (1) einen sich nach unten verengenden Teil (22) bildet, der zusätzlich zu dem Unterdruck im Spalt (20) mit dazu beiträgt, am Außenumfang (1') noch anhaftendes Material durch die Öffnungen (3) wieder nach innen zu drücken, ehe diese Öffnungen den Mantelbereich (2a) des inneren Rohrkörpers (2), in dem die Düsenleiste (4) angeordnet ist, erreichen.

Unterhalb des durch die Rohrkörper (1 und 2) gebildeten, sogenannten Rotoformers ist ein von links nach rechts in Richtung (6) laufendes Stahlband (5) als Transportband vorgesehen, das beim Ausführungsbeispiel senkrecht zu der Richtung der Bohrungen (12) und der Lage der Öffnungen (4) unterhalb des Rotoformers verläuft. Dieses Stahlband (5) wird in einem so geringen Abstand vom Außenumfang (1') des äußeren rotierenden Rohrkörpers (1) vorbeigeführt, daß seine Oberfläche, die aus den beiden zur Deckung kommenden Öffnungen (4 bzw. 3) austretende Tropfenmasse (23) erfaßt, die an der Oberfläche des Bandes (5) kleben bleibt und bei der weiteren Bewegung des Bandes (5) in Richtung des Pfeiles (6) und bei der Drehung des äußeren Rohrkörpers (1) in Richtung (8), zumindest teilweise, aus den Öffnungen (3) herausgezogen wird. Die Öffnungen (3) sind nach dem Verlassen des Bereiches (2a) abgeschlossen. Der Restbereich der noch in ihnen befindlichen Masse wird nach oben mitgenommen. Die Drehgeschwindigkeit des äußeren Rohrkörpers (1) in Richtung des Pfeiles (8) und die Bewegungsgeschwindigkeit des Stahlbandes (5) in Richtung (6) werden dabei so aufeinander abgestimmt, daß die gewünschte Teilmasse aus den Öffnungen (3) herausgezogen wird. In der Regel werden die Geschwindigkeiten so abgestimmt, daß die Bandgeschwindigkeit der Umfangsgeschwindigkeit des Rohrkörpers (1) in etwa entspricht.

Aus dem eben Geschildertern wird deutlich, daß im Gegensatz zu dem bekannten Verfahren der Pastillenherstellung, bei dem ein vollständiges Heraustropfen der Masse aus den Öffnungen erwünscht war, nun auf eine andere Weise die Masse aus den Öffnungen herausgeholt wird, und zwar so, daß durch das zwangsweise Herausziehen der Masse kleinere Öffnungen und damit kleinere Mengen vorgesehen werden können, die dazu zum Teil auch noch durch die wieder geschlossenen Öffnungen (3), wie vorher angedeutet, nach oben wegbefördert werden.Die auf dem Stahlband (5) verbleibende Masse ist äußerst gering.Durch die erfindungsgemäße Anordnung können daher sogenannte Mikropastillen hergestellt werden, deren Größe zwischen 0,5 und 3 mm liegen kann. Es ist zu diesem Zweck notwendig, den Abstand zwischen dem Stahlband (5) und dem Umfang (1') des äußeren Rohrkörpers (1) in der Größenordnung zwischen 0,5 und 2 mm einstellen zu können, wobei der Abstand je nach Produkt und Zähigkeit variierbar sein muß. Der Abstand zwischen Band (5) und dem Rotoformer soll daher in diesen Grenzen einstellbar sein, was in einfacher Weise durch Verstellung des ganzen Rotoformers gegenüber dem Bandführungsgestell möglich ist.

Bei dem geschilderten Vorgang der Mikropastillenbildung, die bei der Weiterbewegung des Stahlbandes (5) in Richtung (6) durch dessen Kühlung auf dem Band zur Endform erstarren, wird sich zumindest an manchen Produkten aufgrund der Zähigkeit jeweils ein Faden (24) von der Öffnung (3) aus zu der Tropfenstelle auf dem Band ziehen, der um so länger wird, je größer der Abstand zwischen dem Umfang (1') des Rohrkörpers (1) und dem Band (5) wird. Um zu vermeiden, daß diese längerwerdenden Fäden abreißen und in unkontrollierter Weise auf das Band (5) zurückfallen und dort unerwünschte zipfelartige Ansätze an den Pastillen (25) bilden, ist eine Fadenwickelwalze (7) vorgesehen, die um ihre Achse (26) in Richtung des Pfeiles (8), d.h. in der gleichen Richtung rotierend angeordnet ist, wie der äußere Rohrkörper (1). Der Umfang (7') der Fadenwickelwalze (7) liegt am Umfang (1') des Rohrkörpers (1) nahezu an. In diesem Anliegebereich werden daher die Umfangsflächen des Rohrkörpers (1) und der Fadenwickelwalze (7) gegensinnig bewegt. Die Fadenwickelwalze (7) nimmt daher vom Umfang (1') des Rohrkörpers (1) die an ihm anhaftenden Fäden (24) ab und sorgt dafür, daß diese Fäden in dem Bereich unterhalb der Fadenwickelwalze (7) nicht länger werden und daher nicht abreißen.

Die Fadenwickelwalze (7) wickelt die Fäden im rechten Bereich ihres Umfanges (7'), in dem die Fäden mit (24') gekennzeichnet sind, wieder an ihrem Umfang auf und sorgt dafür, daß die Fäden nach oben abgezogen werden und daher nicht auf das Band (5) zurückfallen. Nach dem Abziehen der Fäden (24') reicht die den einzelnen Mikropastillen (25) noch innewohnende Wärme aus, um die Abrißstelle des Fadens verschmelzen zu lassen. Die abkühlenden Mikropastillen weisen daher eine abgerundete Form auf.

Die von der Fadenwickelwalze (7) abgerissenen Fäden wickeln sich auf deren oberen Umfangsbereich auf, werden von der Fadenwickelwalze (7) im Sinne des Pfeiles (8) dem Umfang (1') des Rohrkörpers (1) zugeführt und von diesem auf dem Umfang nach links in den Bereich des Einlaufspaltes (22) und des Spaltes (20) gefördert, wo das Material dann der Wiederverwendung zugeführt wird.

Um dies alles zu erreichen und zu gewährleisten, sind die verschiedenen Beheizungen vorgesehen. Auch die Fadenwickelwalze (7) kann mit einer konzentrischen Bohrung (9) zur Beheizung versehen werden, wenn das gewünscht ist, um die abgezogenen Fäden fließfähig genug zu halten, damit sie wieder an die Oberfläche (1') des Rohrkörpers (1) abgegeben werden können. Es kann sich durchaus als unnötig erweisen, die Fadenwickelwalze (7) zu beheizen. Die dünnen aufgewickelten Fäden werden in der Regel auch durch die vom Rohrkörper (2) her beheizte Oberfläche des rotierenden Rohrkörpers (1) so weit wieder aufgeheizt, daß sie einen fließfähigen Zustand erhalten.

Der äußere Rohrkörper (1) wird mit einer Vielzahl der kleineren Bohrungen (3) versehen. Beispielsweise können auf einen Meter der Länge des äußeren Rohrkörpers (1) 30000 bis 60000 Durchtrittsöffnungen (3) vorgesehen werden. Diese große Anzahl erlaubt eine hohe Produktionsrate. Das zu Mikropastillen zu verarbeitende Material sollte in der Regel eine Viskosität größer als etwa 1000 cP aufweisen. Durch Temperaturregelung am Rohrkörper (2) kann diese gewünschte Viskosität mit wenigen Ausnahmen auch erreicht werden.

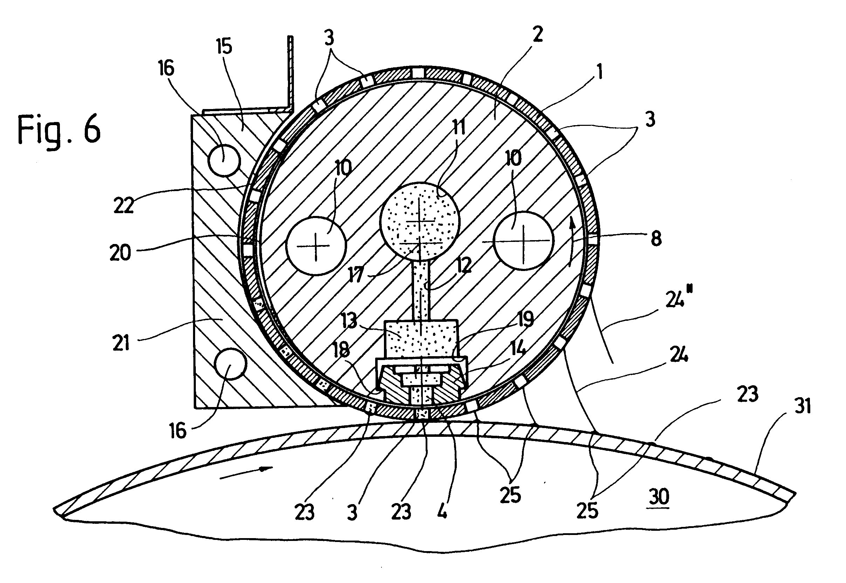

Fig. 6 zeigt eine Abwandlung der Vorrichtung der Fig. 5 insofern, als anstelle des bewegten Kühlbandes (5) eine rotierende Kühlwalze (30) vorgesehen ist, deren Umfangsfläche (31) in der gleichen Weise, wie das Transportband (5), unter dem Rohrkörper (1) eines sogenannten Rotoformers vorbeibewegt wird, der im übrigen identisch zu dem in der Fig. 5, ausgebildet ist. Die dort verwendeten Bezugszeichen sind daher beibehalten worden.

Auch bei dieser Ausführungsform werden die sich bildenden Teilmassen (23), wie in den Fig. 1 bis 4 beschrieben, von der Oberfläche (31) erfaßt, die hier allerdings nicht auf die Öffnungen (3) zu- oder von diesen wegbewegt zu werden braucht, weil die Dosierung der intermittierend zur Deckung kommenden Öffnungen (4 und 3) erfolgt. Die sich auf der Umfangsfläche (31) bilden den Häufchen (25) ziehen je nach verwendetem Material unter Umständen Fäden (24), die aber, auch ohne die Anordnung einer Fadenwickelrolle (7), wie in Fig. 5, nicht auf die Oberfläche (31) zurückfallen, da sie von dem im Gegenuhrzeigersinn rotierenden Rohrkörper (1) nach oben mitgenommen werden und abreißen. Sollte dies je nach Material nicht erfolgen, so kann selbstverständlich auch bei der Ausführungsform der Fig. 6 eine Fadenwickelwalze (7), gemäß Fig. 5, vorgesehen werden. Der Durchmesser der Kühlwalze (30) ist, wie nur andeutungsweise in Fig. 6 zu erkennen ist, in der Regel um ein Vielfaches größer gewählt als der Durchmesser des Rohrkörpers.

## Patentansprüche

1. Verfahren zur Herstellung von Pastillen, bei dem flüssige, viskose Masse beim Durchtritt durch kleine Öffnungen in tropfenartige Teilmengen aufgeteilt wird, die anschließend auf einer bewegten Transportfläche zur festen Form abgekühlt werden, dadurch gekennzeichnet, daß die Teilmengen durch unmittelbaren, zyklischen Kontakt mit der Transportfläche aus den Öffnungen herausgezogen und gebildet werden.

2. Verfahren nach Anspruch 1, dadurch gekennzeichnet, daß die Öffnungen intermittierend geöffnet und geschlossen werden und die Transportfläche kontinuierlich an den Öffnungen vorbeigeführt wird.

3. Verfahren nach Anspruch 1 und 2, dadurch gekennzeichnet, daß die Transportfläche unterhalb der Öffnungen bewegt wird.

4. Vorrichtung zur Durchführung des Verfahrens nach einem der Ansprüche 1 bis 3, bei der die flüssige, viskose Masse axial in das Innere von zwei drehbar und konzentrisch ineinandergeführten zylindrischen Rohrkörpern (1, 2) gefördert wird, von denen einer mit auf dem Umfang verteilt angeordneten Durchtrittsöffnungen (3) versehen ist und sich relativ zum anderen Rohrkörper (2) dreht, und der andere Rohrkörper (2) nur in einem Mantelbereich (2a) mit Durchtrittsöffnungen (4) versehen ist, die einer Transportfläche zugewandt sind und zyklisch mit den Öffnungen (3) im ersten Rohrkörper (1) zur Deckung kommen, dadurch gekennzeichnet, daß die Transportfläche (5) am Umfang (1') des äußeren Rohrkörpers (1) nahezu anliegt und die aus den Öffnungen (3) austretende Masse in Transportrichtung (6) mitzieht.

5. Vorrichtung nach Anspruch 4, dadurch gekennzeichnet, daß als Transportfläche die Oberfläche eines Transportbandes, insbesondere eines Stahlbandes (5) vorgesehen ist, das von unten gekühlt ist.

6. Vorrichtung nach Anspruch 4, dadurch gekennzeichnet, daß als Transportfläche die Umfangsfläche einer Kühlwalze vorgesehen ist, die in geringem Abstand zum äußeren Rohrkörper (1) geführt ist.

7. Vorrichtung nach Anspruch 5, dadurch gekennzeichnet, daß der geringe Abstand zwischen Transportband (5) und Umfang (1') des äußeren Rohrkörpers (1) einstellbar ist.

8. Vorrichtung nach Anspruch 4, dadurch gekennzeichnet, daß der innere Rohrkörper (2) feststeht und der äußere rotiert und daß den Rohrkörpern (1, 2) in der Transportrichtung (6) eine rotierende Fadenwickelwalze (7) nachgeschaltet ist, die oberhalb des Transportbandes (5) gelegen ist und mit ihrem Umfang an dem äußeren Rohrkörper (1) nahezu anliegt.

9. Vorrichtung nach Anspruch 8, dadurch gekennzeichnet, daß die Fadenwickelwalze (7) mit einer höheren Drehzahl umläuft als der äußere Rohrkörper (1).

10. Vorrichtung nach Anspruch 8 oder 9, dadurch gekennzeichnet, daß die Fadenwickelwalze (7) in der gleichen Drehrichtung (8) wie der äußere Rohrkörper (1) umläuft.

11. Vorrichtung nach Anspruch 8, dadurch gekennzeichnet, daß die Fadenwickelwalze (7) mit einer Heizeinrichtung (9) versehen ist.

12. Vorrichtung nach Anspruch 11, dadurch gekennzeichnet, daß als Heizeinrichtung ein von einem Wärmetauschmedium durchströmter Kanal (9) innerhalb der Fadenwickelwalze (7) vorgesehen ist.

13. Vorrichtung nach Anspruch 11, dadurch gekennzeichnet, daß als Heizeinrichtung (9) elektrische Heizstäbe vorgesehen sind.

14. Vorrichtung nach Anspruch 6, dadurch gekennzeichnet, daß die Kühlwalze innen gekühlt ist und einen wesentlich größeren Durchmesser als der äußere Rohrkörper (1) aufweist.

## Claims

1. A method of producing pastilles in which liquid viscous composition, as it passes through small apertures, is subdivided into drop-like partial quantities which are then cooled to the solid state on a moving conveyor surface, characterised in that the partial quantities are drawn out from the apertures and are formed by direct cyclic contact with the transport surface.

2. A method according to Claim 1, characterised in that the apertures are intermittently opened and closed and in that the transport surface passes continuously by the apertures.

3. A method according to Claim 1 and 2, characterised in that the transport surface is moved beneath the apertures.

4. An apparatus for carrying out the method according to one of Claims 1 to 3 in which the liquid viscous mass is passed axially into the interior of two rotatably and concentrically inter-engaged cylindrical tubular bodies (1, 2) one of which is provided with through-flow orifices (3) distributed over its periphery and rotates in relation to the other tubular body (2) and in that the other tubular body (2) which is only provided with through-flow orifices (4) on a portion (2a) of its outer shell and which face a transport surface coincide cyclically with the orifices (3) in the first tubular body (1), characterised in that the transport surface (5) virtually bears on the periphery (1') of the outer tubular body (1) and entrains in the transport direction (6) the mass which emerges from the orifices (3).

5. An apparatus according to Claim 4, characterised in that the transport surface provided is the surface of a conveyor belt, particularly of a steel belt (5), which is cooled from below.

6. An apparatus according to Claim 4, characterised in that the transport surface provided is the peripheral surface of a cooling roller which is guided at a minimal distance from the outer tubular body (1).

7. An apparatus according to Claim 5, characterised in that the minimal distance between the conveyor belt (5) and the periphery (1') of the outer tubular body (1) is adjustable.

8. An apparatus according to Claim 4, characterised in that the inner tubular body (2) is fixed while the outer rotates and in that downstream of the tubular bodies (1, 2) in the transport direction (6) there is a rotating thread winding roll (7) which is situated above the conveyor belt (5) and which has its periphery almost bearing on the outer tubular body (1).

9. An apparatus according to Claim 8, characterised in that the thread winding roll (7) rotates at a higher speed than the outer tubular body (1).

10. An apparatus according to Claim 8 or 9, characterised in that the thread winding roll (7) rotates in the same direction (8) as the outer tubular body (1).

11. An apparatus according to Claim 8, characterised tin that the thread winding roll (7) is provided with a heating device (9).

12. An apparatus according to Claim 11, characterised in that provided as a heating device is a passage (9) within the thread winding roll (7) and through which a heat exchanging medium flows.

13. An apparatus according to Claim 11, characterised in that electrical heating bars are provided as a heating device (9).

14. An apparatus according to Claim 6, characterised in that the cooling roll is internally cooled and has a substantially greater diameter than the outer tubular body (1).

**Revendications**

1. Procédé pour fabriquer des pastilles, selon lequel une masse visqueuse liquide est subdivisée, lors de son passage dans de petits orifices, en des quantités partielles en forme de gouttes, qui sont ensuite refroidies sur une surface mobile de transport pour prendre une forme solide, caractérisé en ce que les quantités partielles sont prélevées des orifices et formées au moyen d'un contact cyclique direct avec la surface de transport.

2. Procédé selon la revendication 1, caractérisé en ce que les orifices sont ouverts et fermés de façon intermittente et que la surface de transport est déplacée continûment devant les orifices.

3. Procédé selon les revendications 1 et 2, caractérisé en ce que la surface de transport est déplacée au-dessous des orifices.

4. Dispositif pour la mise en oeuvre du procédé selon l'une des revendications 1 à 3, dans lequel la masse visqueuse liquide est entraînée axialement à l'intérieur de deux corps tubulaires cylindriques rotatifs (1,2), disposés concentriquement l'un dans l'autre et dont l'un comporte des orifices de passage (3) répartis sur la périphérie et tourne par rapport à l'autre corps tubulaire (2), tandis que l'autre corps tubulaire (2) est pourvu, uniquement dans une zone (2a) de son enveloppe, d'orifices de passage (4), qui sont tournés vers une surface de transport et viennent cycliquement en recouvrement avec les orifices (3) situés dans le premier corps tubulaire (1), caractérisé en ce que la surface de transport (5) est presque appliqué contre la périphérie (1') du corps tubulaire extérieur (1) et entraîne dans la direction de transport (6), la masse qui sort des orifices (3).

5. Dispositif selon la revendication 4, caractérisé en ce qu'il est prévu, comme surface de transport, la surface d'une bande convoyeuse, notamment d'une bande d'acier (5), qui est refroidie par en-dessous

6. Dispositif selon la revendication 4, caractérisé en ce qu'il est prévu, comme surface de transport, la surface circonférentielle d'un cylindre de refroidissement qui s'étend à une faible distance du corps tubulaire extérieur (1).

7. Dispositif selon la revendication 5, caractérisé en ce que la faible distance entre la bande convoyeuse (5) et la périphérie (1') du corps tubulaire extérieur (1) est réglable.

8. Dispositif selon la revendication 4, caractérisé en ce que le corps tubulaire intérieur (2) est fixe et le corps tubulaire extérieur tourne et qu'en aval des corps tubulaires (1,2), dans la direction de transport (6), est installé un cylindre rotatif (7) d'enroulement de fils, qui est disposé au-dessus de la bande convoyeuse (5) et est presque appliqué, par sa périphérie, contre le corps tubulaire extérieur (1).

9. Dispositif selon la revendication 8, caractérisé en ce que le cylindre (7) d'enroulement de fils tourne avec une vitesse de rotation supérieure à celle du corps tubulaire extérieur (1).

10. Dispositif selon la revendication 8 ou 9, caractérisé en ce que le cylindre (7) d'enroulement de fils tourne dans le même sens de rotation (8) que le corps tubulaire extérieur (1).

11. Dispositif selon la revendication 8, caractérisé en ce que le cylindre (7) d'enroulement de fils est équipé d'un dispositif de chauffage (9).

12. Dispositif selon la revendication 11, caractérisé en ce qu'il est prévu, comme dispositif de chauffage, un canal (9), qui est parcouru par un milieu d'échange thermique et est ménagé dans le cylindre (7) d'enroulement de fils.

13. Dispositif selon la revendication 11, caractérisé en ce qu'il est prévu, comme dispositif de chauffage (9), des barres chauffantes électriques.

14. Dispositif selon la revendication 6, caractérisé en ce que le cylindre de refroidissement est refroidi intérieurement et possède un diamètre extérieur nettement supérieur à celui du corps tubulaire extérieur (1).

Fig. 1

43

42

44

40

40'

41

6

46'

46

47

48

45

43

42

44

23

40

6

Fig. 2

43

44

25'

6

40

Fig. 3

44

25

40

6

Fig. 4

Fig. 5

EP 0 339 325 B1

Fig. 6

EP 0 339 325 B1